# FASCICULE DE BREVET EUROPEEN

(11) **EP 4 256 268 B1**
(45) Date de publication et mention de la délivrance du brevet: **05.03.2025**
(21) Numéro de dépôt: 21823265.0
(22) Date de dépôt: 30.11.2021
(51) Int. Cl.: F41G 7/22, F41H 13/00, G01S 7/481, G01S 7/495

(54) **SYSTEME OPTRONIQUE OMNIDIRECTIONNEL A DEUX AXES DE ROTATION**
OMNIDIREKTIONALES OPTRONISCHES SYSTEM MIT ZWEI DREHACHSEN
OMNIDIRECTIONAL OPTRONIC SYSTEM HAVING TWO ROTATION AXES

(30) Priorité: 03.12.2020 FR 2012572
(43) Date de publication de la demande: 11.10.2023
(73) Titulaire: THALES, 92190 Meudon (FR)
(72) Inventeur: MECHAIN, Grégoire, 78995 Elancourt Cedex (FR); FORESTIER, Bernard, 78995 Elancourt Cedex (FR); BUSTIN, Bruno, 78995 Elancourt Cedex (FR); ROUSSEAU, Pascal, 78995 Elancourt Cedex (FR)
(74) Mandataire: Atout PI Laplace
(86) Numéro de dépôt international: PCT/EP2021/083478
(87) Numéro de publication internationale: WO 2022/117532

(56) Documents cités:
- US-A1- 2003 098 387
- US-A1- 2011 084 195
- US-B2- 7 564 478

## Description

L'invention porte sur un système optronique omnidirectionnel, ou tête d'orientation de la ligne de visée, à deux axes de rotation comprenant une voie d'imagerie et une voie laser.

Le système optronique est un appareil permettant de détecter pour une plate-forme de combat, des missiles guidés tirés en sa direction munis d'une tête chercheuse optique, et capable de générer un faisceau laser dirigé vers la tête chercheuse de ces missiles afin de les neutraliser et les détourner de leur cible.

Les documents EP 1946350 B1, US 20070075182 A1, US2003098387A1 et US 8334490 B2

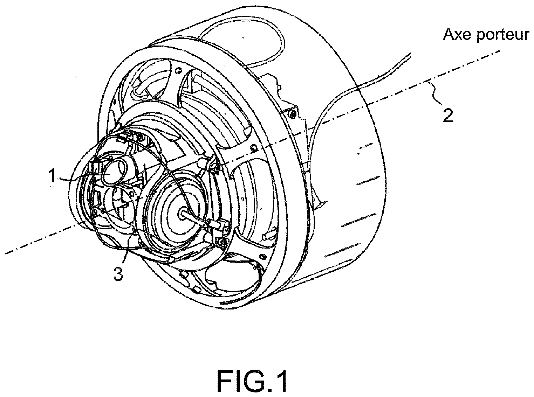

divulguent différents modes de réalisation d'un système optronique omnidirectionnel à deux axes de rotation pour nacelle de désignation d'aéronef de combat. Comme illustré sur la figure 1, qui est une figure du la ligne de visée à deux axes comprend une pupille d'émission laser 1 excentrée par rapport à l'axe porteur 2 et une pupille de réception 3 centrée sur l'axe porteur 2. Ces deux pupilles 1, 3 sont séparées spatialement. L'inconvénient de cette solution est que le laser est transporté jusqu'à l'axe porté 2 au moyen d'une fibre optique et par conséquent ce transport introduit trop de perte de puissance sur les longueurs d'onde émises dans l'infrarouge. Les documents US 20070075182 A1 et US 8334490 B2 complètent le document EP 1946350 B1 en introduisant un miroir hors axe porteur pour corriger les aberrations introduites par un hublot externe en forme de dôme sphérique sur la voie laser qui est excentrée.

Il est également connu le document US 6779753 B2 qui divulgue un système optronique omnidirectionnel à deux axes de rotation pour nacelle de désignation d'aéronef de combat, comme illustré sur la figure 2, correspondant à la figure 1 du document US 6779753 B2. La ligne de visée optique à deux axes comporte une pupille d'émission laser 66 excentrée par rapport à l'axe porteur 16 et une pupille de réception 58 centrée sur l'axe porteur 16. L'ensemble laser et imagerie de réception est présenté comme étant fixe. Cela impose une complexité opto-mécanique importante notamment pour le prisme de renvoi 86 qui doit rester fixe entre la partie tournante selon l'axe porteur (axe vertical passant par le centre du hublot 12 en forme de dôme) et le mécanisme de renvoi du laser constitués d'un ensemble de prisme et miroirs 86, 72 et 74 (synchrone de la rotation de l'axe porteur). Ce prisme rend impossible une rotation complète de 360° sur plusieurs tours et implique des retournements complets en limite de domaine de rotation (risque de perte de maintien de la ligne de visée sur un objet lors du retournement). De plus, ce système impose une double motorisation complexe sur l'axe porteur qui augmenterait sensiblement l'encombrement.

Les systèmes de l'état de l'art comprennent une direction avec un point singulier à éviter, ou, en d'autres termes, éviter, que lorsque l'objet visé arrive sur l'axe porteur, il y ait une ambiguïté et que cela oblige une rotation de 180° instantané de l'axe porteur.

Un but de l'invention est de pallier les problèmes précédemment cités, et notamment de pouvoir améliorer la compacité, et de limiter l'occultation de la voie d'imagerie par la voie laser.

Il est proposé, selon un aspect de l'invention, un système optronique omnidirectionnel, à deux axes de rotation, un axe porteur et un axe porté perpendiculaires entre eux, comprenant une voie d'imagerie et une voie laser, dans lequel, la voie laser à l'injection en entrée du système et la voie d'imagerie sont concentriques selon l'axe porteur, comprenant :
- pour la voie laser:
   - une première surface réfléchissante, disposé en entrée du système à l'injection, configuré pour séparer la voie laser de la voie optique en réfléchissant le faisceau laser injecté de sorte à l'écarter de l'axe porteur du système;
- une deuxième surface réfléchissante pour dévier le faisceau laser réfléchi par la première surface réfléchissante vers la fenêtre de sortie en forme de dôme sphérique, décalé de la voie optique;
- un expanseur configuré pour augmenter le diamètre du faisceau laser réfléchi par la deuxième surface réfléchissante et réduire sa divergence;
- un déviateur configuré pour modifier la direction angulaire du faisceau laser à l'intérieur d'un cône d'angle au sommet compris entre 3° et 6°;
- une troisième surface réfléchissante et une quatrième surface réfléchissante configurées pour diriger le faisceau laser expansé vers la fenêtre de sortie en forme de dôme sphérique parallèlement à l'axe porteur; et
- un dispositif de compensation configuré pour compenser des aberrations de la fenêtre de sortie en forme de dôme sphérique;
- pour la voie d'imagerie:
- un premier groupe de lentilles et un deuxième groupe de lentilles disposés en dispositif afocal de Kepler;
- une cinquième surface réfléchissante, une sixième surface réfléchissante, une septième surface réfléchissante, et une huitième surface réfléchissante, disposées entre les deux groupes de lentilles;

la première surface réfléchissante, la deuxième surface réfléchissante, l'expanseur, le déviateur, la troisième surface réfléchissante, la cinquième surface réfléchissante, la sixième surface réfléchissante, la septième surface réfléchissante formant un premier ensemble lié en rotation selon l'axe porteur; et
la quatrième surface réfléchissante, la huitième surface réfléchissante, le deuxième groupe de lentilles, et le compensateur formant un deuxième ensemble lié en rotation selon l'axe porté.

Un tel système permet d'isoler complètement les deux voies optiques (imagerie et laser) tout en limitant efficacement la perturbation photométrique de la voie d'imagerie par la voie laser (optimisation de la rétrodiffusion et les rétro-réflexions du laser vers la voie d'imagerie).

En outre, avoir un axe d'injection commun pour la voie laser et la voie d'imagerie de poursuite sur l'axe porteur d'une tête d'orientation de ligne de visée à deux axes permet d'avoir un débattement de 360° sans limitation du nombre de tour dans un encombrement réduit), et ainsi d'éviter la présence de point singulier.

Selon un mode de réalisation, le système comprend un premier étage mobile en rotation selon l'axe porteur, permettant la rotation de la ligne de visée selon l'axe porteur.

Dans un mode de réalisation, le système comprend un deuxième étage mobile en rotation selon l'axe porté, permettant la rotation de la ligne de visée selon l'axe porté.

Ainsi, la ligne de visée peut être orientée dans un espace angulaire supérieur à 2πsr.

Selon un mode de réalisation, le dispositif afocal de Kepler a un grossissement compris dans l'intervalle de valeurs [-2; -0,5].

Cet afocal permet le transport de la pupille au travers des axes de rotation jusqu'au voisinage du séparateur laser/imagerie situé sur l'axe porteur. Ainsi, la propagation des faisceaux d'imagerie peut s'effectuer sans vignettage à l'aide de composants de dimensions minimisées, et le volume du dispositif d'orientation de ligne de visée est optimisé. En outre, placer le séparateur au voisinage d'un plan pupillaire permet de minimiser la perturbation de la voie d'imagerie ainsi générée par le séparateur.

Dans un mode de réalisation, le dispositif afocal de Kepler a un grossissement de -1.

Selon un mode de réalisation, l'expanseur comprend un dispositif afocal divergent/convergent.

Par exemple, le dispositif afocal divergent/convergent comprend des lentilles (afocal galiléen classique), ou des miroirs (afocal de type Cassegrain hors d'axe).

Ce type de dispositif permet de diminuer la divergence sans point de focalisation intermédiaire donc sans risque de claquage.

Dans un mode de réalisation, le déviateur comprend un diasporamètre, ou un miroir à deux axes, permettant d'orienter la ligne de visée laser dans le champ instantané d'imagerie.

Ainsi, le déviateur permet d'améliorer la compensation des défauts de mouvement résiduels du dispositif d'orientation de la ligne de visée motorisée pour assurer la qualité du pointage du faisceau dans une boucle de poursuite utilisant le retour laser vu par la voie d'imagerie.

Le déviateur permet également d'harmoniser les directions des axes optiques laser et imagerie. Enfin, placer ce dispositif au plus proche de la sortie permet de minimiser la dimension des composants optiques laser de sortie et donc du dispositif d'orientation de la ligne de visée.

Selon un mode de réalisation, le compensateur comprend au moins un composant dioptrique sphérique ou asphérique décentré.

Le compensateur est un composant optique permettant de corriger les aberrations introduites par l'excentrement de la pupille laser par rapport au dôme, ce qui permet de garantir la qualité du faisceau laser.

Il est également proposé, selon un autre aspect de l'invention, une plate-forme munie d'un système tel que décrit précédemment.

Par exemple, la plate-forme peut être un aéronef de combat, un aéronef de transport, un aéronef militaire, un drone, un bâtiment, un véhicule terrestre ou un navire.

L'invention sera mieux comprise à l'étude de quelques modes de réalisation décrits à titre d'exemples nullement limitatifs et illustrés par le dessin annexé sur lequel:
[Fig.1] illustre schématiquement un système optronique omnidirectionnel, selon l'état de la technique;

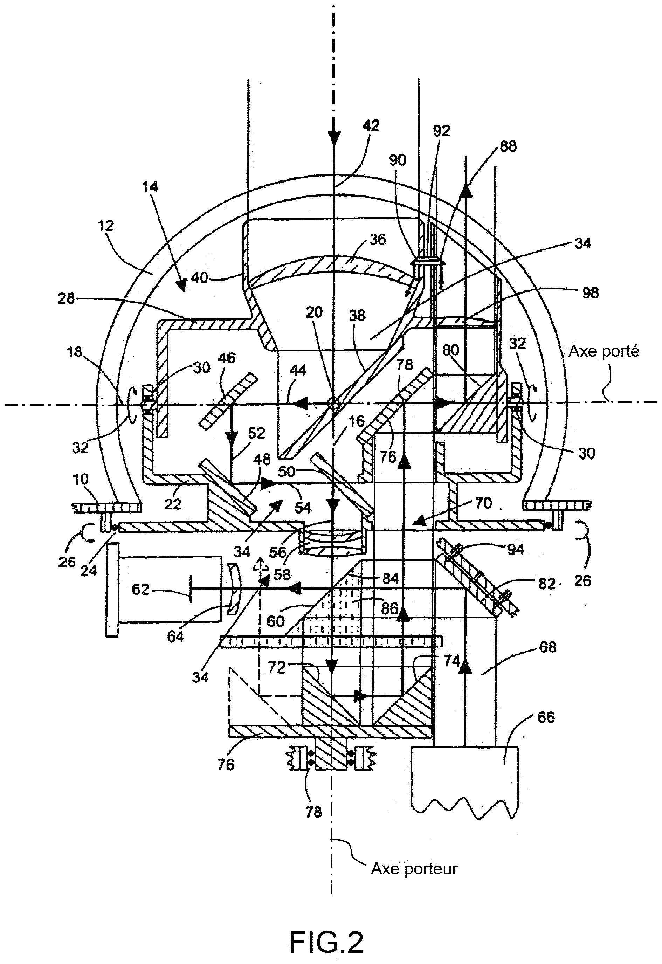

[Fig.2] illustre schématiquement un autre système optronique omnidirectionnel, selon l'état de la technique; et
[Fig.3] illustre schématiquement un système optronique omnidirectionnel, selon un aspect de l'invention.

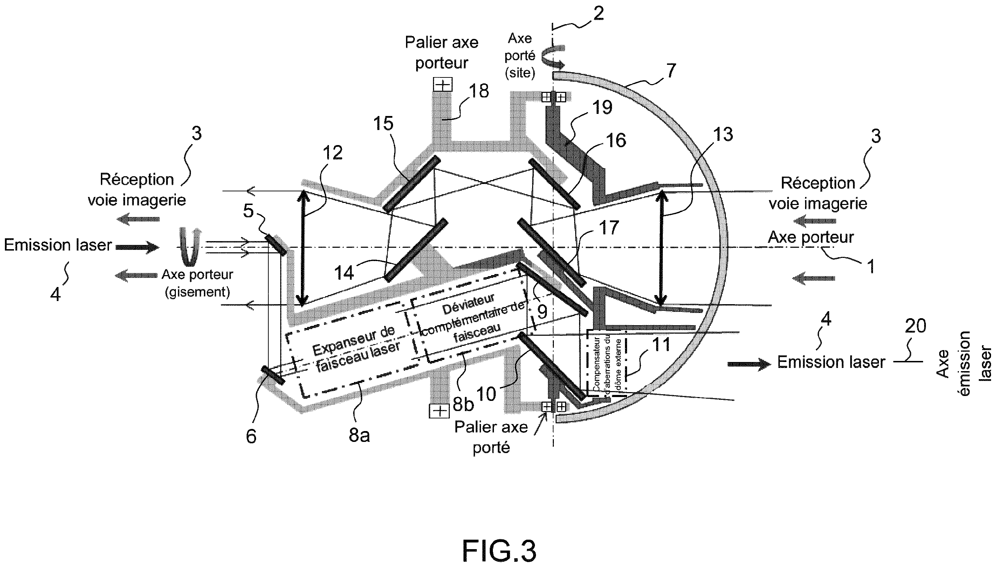

Sur la figure 3 est illustré un système optronique omnidirectionnel, à deux axes de rotation, un axe porteur 1 et un axe porté 2 perpendiculaires entre eux. Le système comprend une voie d'imagerie 3 et une voie laser 4, dans lequel, la voie laser 4 à l'injection ou émission en entrée du système et la voie d'imagerie 3 sont concentriques selon l'axe porteur 1.

La voie laser 4 comprend :
- une première surface réfléchissante 5, disposée en entrée du système à l'injection, configuré pour séparer la voie laser 4 de la voie d'imagerie 3 en réfléchissant le faisceau laser injecté de sorte à l'écarter de l'axe porteur 1 du système;
   - une deuxième surface réfléchissante 6 pour dévier le faisceau laser réfléchi par la première surface réfléchissante 5 vers la fenêtre de sortie 7 en forme de dôme sphérique, décalé de la voie d'imagerie 3;
   - un expanseur 8a configuré pour augmenter le diamètre du faisceau laser réfléchi par la deuxième surface réfléchissante 6 et réduire sa divergence;
   - un déviateur 8b configuré pour modifier la direction angulaire du faisceau laser à l'intérieur d'un cône d'angle au sommet compris entre 3° et 6°;
   - une troisième surface réfléchissante 9 et une quatrième surface réfléchissante 10 configurées pour diriger le faisceau laser expansé vers la fenêtre de sortie 7 en forme de dôme sphérique parallèlement à l'axe porteur 1; et
   - un compensateur 11 configuré pour compenser des aberrations de la fenêtre de sortie 7 en forme de dôme sphérique;

La voie d'imagerie 3 comprend:
- un premier groupe de lentilles 12 et un deuxième groupe de lentilles 13 disposés en dispositif afocal de Kepler; et
- une cinquième surface réfléchissante 14, une sixième surface réfléchissante 15, une septième surface réfléchissante 16, et une huitième surface réfléchissante 17, disposées entre les deux groupes de lentilles 12, 13.

Les voies d'imagerie 3 et laser 4 sont concentriques sur l'axe porteur 1 à l'injection sur ce dernier.

Elles sont séparées juste après l'injection du faisceau laser 4 afin d'avoir en sortie du système deux axes colinéaires, l'axe porteur 1 et l'axe d'émission laser 20 mais physiquement séparés pour éviter, d'une part, le couplage parasite dans l'atmosphère entre ces voies, et d'autre part, que le laser passe par le plan focal intermédiaire du dispositif afocal de Kepler de la voie d'imagerie 3 et d'introduire des densités de puissance trop importantes dans cette image intermédiaire pouvant perturber à la fois la voie imagerie 3 et la qualité de faisceau de la voie laser 3.

La couverture angulaire du système optronique est effectuée en totalité (>2π sr) en résolvant la problématique du point singulier au moyen du déviateur 8b agissant sur la voie laser 4.

La première surface réfléchissante 5, la deuxième surface réfléchissante 6, l'expanseur 8a, le déviateur 8b, la troisième surface réfléchissante 9, la cinquième surface réfléchissante 14, la sixième surface réfléchissante 15, la septième surface réfléchissante 16 formant un premier ensemble lié en rotation selon l'axe porteur 1.

La quatrième surface réfléchissante 10, la huitième surface réfléchissante 17, le deuxième groupe de lentilles 13, et le compensateur 11 forment un deuxième ensemble lié en rotation selon l'axe porté 2.

Le système comprend également un premier support 18 de l'ensemble lié en rotation selon l'axe porteur 1, muni de paliers porteurs permettant la rotation selon l'axe porteur 1.

Le système comprend un deuxième support 19 de l'ensemble lié en rotation selon l'axe porté 2, muni de paliers porteurs permettant la rotation selon l'axe porté 2.

Le dispositif afocal de Kepler 12, 13 a un grossissement compris dans l'intervalle de valeurs [-2; -0,5], par exemple sensiblement -1.

L'expanseur est un dispositif afocal divergent/convergent selon la propagation du laser. Un tel afocal peut être réalisé par exemple à l'aide de lentilles (afocal galiléen classique) ou de miroirs (afocal de type Cassegrain hors d'axe).

Le déviateur peut comprendre un diasporamètre, ou un miroir à deux axes permettant de déplacer la ligne de visée laser dans le champ instantané imagerie.

Le compensateur peut comprendre un ou plusieurs composants dioptriques sphériques ou asphériques décentrés.

Un système selon l'invention est monté sur une plate-forme pouvant être un aéronef de combat, un aéronef de transport, un aéronef militaire, un drone, un bâtiment, un véhicule terrestre ou un navire.

## Revendications

1. Système optronique omnidirectionnel, à deux axes de rotation, un axe porteur (1) et un axe porté (2) perpendiculaires entre eux, comprenant une voie d'imagerie (3) et une voie laser (4), dans lequel, la voie laser (4) à l'injection en entrée du système et la voie d'imagerie (3) sont concentriques selon l'axe porteur (1), **caractérisé en ce que** la voie laser (4) comprend:
- une première surface réfléchissante (5), disposée en entrée du système à l'injection, configuré pour séparer la voie laser (4) de la voie d'imagerie (3) en réfléchissant le faisceau laser injecté de sorte à l'écarter de l'axe porteur (1) du système;
- une deuxième surface réfléchissante (6) pour dévier le faisceau laser réfléchi par la première surface réfléchissante (5) vers la fenêtre de sortie (7) en forme de dôme sphérique, décalé de la voie d'imagerie (3);
- un expanseur (8a) configuré pour augmenter le diamètre du faisceau laser réfléchi par la deuxième surface réfléchissante (6) et réduire sa divergence;
- un déviateur (8b) configuré pour modifier la direction angulaire du faisceau laser à l'intérieur d'un cône d'angle au sommet compris entre 3° et 6°;
- une troisième surface réfléchissante (9) et une quatrième surface réfléchissante (10) configurées pour diriger le faisceau laser expansé vers la fenêtre de sortie (7) en forme de dôme sphérique parallèlement à l'axe porteur (1); et
- un compensateur (11) configuré pour compenser des aberrations de la fenêtre de sortie (7) en forme de dôme sphérique;
- pour la voie d'imagerie (3):
- un premier groupe de lentilles (12) et un deuxième groupe de lentilles (13) disposés en dispositif afocal de Kepler; et
- une cinquième surface réfléchissante (14), une sixième surface réfléchissante (15), une septième surface réfléchissante (16), et une huitième surface réfléchissante (17), disposées entre les deux groupes de lentilles (12, 13);
la première surface réfléchissante (5), la deuxième surface réfléchissante (6), l'expanseur (8a), le déviateur (8b), la troisième surface réfléchissante (9), la cinquième surface réfléchissante (14), la sixième surface réfléchissante (15), la septième surface réfléchissante (16) formant un premier ensemble lié en rotation selon l'axe porteur (1); et
la quatrième surface réfléchissante (10), la huitième surface réfléchissante (17), le deuxième ensemble de lentilles (13), et le compensateur (11) formant un deuxième groupe lié en rotation selon l'axe porté (2);

2. Système selon la revendication 1, comprenant un premier étage mobile (18) en rotation selon l'axe porteur (1), permettant la rotation de la ligne de visée selon l'axe porteur (1).

3. Système selon la revendication 1 ou 2, comprenant un deuxième étage mobile (19) en rotation selon l'axe porté (2), permettant la rotation de la ligne de visée selon l'axe porté (2).

4. Système selon l'une des revendications précédentes, dans lequel le dispositif afocal de Kepler a un grossissement compris dans l'intervalle de valeurs [-2; -0,5].

5. Système selon la revendication 4, dans lequel le dispositif afocal de Kepler a un grossissement de -1.

6. Système selon l'une des revendications précédentes, dans lequel l'expanseur (8a) comprend un dispositif afocal divergent/convergent.

7. Système selon la revendication 6, dans lequel le dispositif afocal divergent/convergent comprend des lentilles, ou des miroirs.

8. Système selon l'une des revendications précédentes, dans lequel le déviateur (8b) comprend un diasporamètre, ou un miroir à deux axes, permettant d'orienter la ligne de visée laser dans le champ instantané imagerie.

9. Système selon l'une des revendications précédentes, dans lequel le compensateur (11) comprend au moins un composant dioptrique sphérique ou asphérique décentré.

10. Plate-forme munie d'un système selon l'une des revendications précédentes.

11. Plate-forme selon la revendication 10, étant un aéronef de combat, un aéronef de transport, un aéronef militaire, ou un drone, un bâtiment, un véhicule terrestre ou un navire.

## Patentansprüche

1. Ungerichtetes optronisches System mit zwei Drehachsen, einer Trägerachse (1) und einer getragenen Achse (2), die zueinander senkrecht stehen, umfassend einen Bildgebungskanal (3) und einen Laserkanal (4), wobei der Laserkanal (4) bei der Einspeisung am Eingang des Systems und der Bildgebungskanal (3) mit der Trägerachse (1) konzentrisch sind, **dadurch gekennzeichnet, dass** der Laserkanal (4) Folgendes umfasst:
- eine erste Reflexionsfläche (5), die am Eingang des Systems bei der Einspeisung angeordnet ist, das dafür konfiguriert ist, den Laserkanal (4) von dem Bildgebungskanal (3) durch Reflexion des eingespeisten Laserstrahls derart zu trennen, dass er von der Trägerachse (1) des Systems weggerückt wird;
- eine zweite Reflexionsfläche (6) zum Ablenken des von der ersten Reflexionsfläche (5) reflektierten Laserstrahls zum Ausgangsfenster (7) in Form einer sphärischen Kuppel, die vom Bildgebungskanal (3) versetzt ist;
- einen Expander (8a), der dafür konfiguriert ist, den Durchmesser des von der zweiten Reflexionsfläche (6) reflektierten Laserstrahls zu vergrößern und seine Divergenz zu verkleinern;
- einen Deflektor (8b), der dafür konfiguriert ist, die Winkelrichtung des Laserstrahls innerhalb eines Kegelwinkels zwischen 3° und 6° zu modifizieren;
- eine dritte Reflexionsfläche (9) und eine vierte Reflexionsfläche (10), die dafür konfiguriert sind, den expandierten Laserstrahl zum Ausgangsfenster (7) in Form einer sphärischen Kuppel parallel zur Trägerachse (1) zu lenken; und
- einen Kompensator (11), der dafür konfiguriert ist, Abbildungsfehler des Ausgangsfensters (7) in Form einer sphärischen Kuppel zu kompensieren;
- für den Abbildungskanal (3):
- eine erste Linsengruppe (12) und eine zweite Linsengruppe (13), die als afokale Kepler-Vorrichtung angeordnet sind; und
- eine fünfte Reflexionsfläche (14), eine sechste Reflexionsfläche (15), eine siebte Reflexionsfläche (16) und eine achte Reflexionsfläche (17), die zwischen den beiden Linsengruppen (12, 13) angeordnet sind;
wobei die erste Reflexionsfläche (5), die zweite Reflexionsfläche (6), der Expander (8a), der Deflektor (8b), die dritte Reflexionsfläche (9), die fünfte Reflexionsfläche (14), die sechste Reflexionsfläche (15), die siebte Reflexionsfläche (16) einen ersten Aufbau bilden, der drehend mit der Trägerachse (1) verbunden ist; und
wobei die vierte Reflexionsfläche (10), die achte Reflexionsfläche (17), der zweite Linsenaufbau (13) und der Kompensator (11) eine zweite Gruppe bilden, die drehend mit der getragenen Achse (2) verbunden ist.

2. System nach Anspruch 1, umfassend eine erste mobile Stufe (18), die um die Trägerachse (1) drehbar ist und die Drehung der Sichtlinie um die Trägerachse (1) ermöglicht.

3. System nach Anspruch 1 oder 2, umfassend eine zweite mobile Stufe (19), die um die getragene Achse (2) drehbar ist und die Drehung der Sichtlinie um die getragene Achse (2) ermöglicht.

4. System nach einem der vorhergehenden Ansprüche, wobei die afokale Kepler-Vorrichtung eine Vergrößerung im Werteintervall von [-2; -0,5] aufweist.

5. System nach Anspruch 4, wobei die afokale Kepler-Vorrichtung eine Vergrößerung von -1 aufweist.

6. System nach einem der vorhergehenden Ansprüche, wobei der Expander (8a) eine divergierende/konvergierende afokale Vorrichtung umfasst.

7. System nach Anspruch 6, wobei die divergierende/konvergierende afokale Vorrichtung Linsen oder Spiegel umfasst.

8. System nach einem der vorhergehenden Ansprüche, wobei der Deflektor (8b) ein Diasporameter oder einen Spiegel mit zwei Achsen umfasst, das/der es ermöglicht, die Lasersichtlinie in dem aktuellen Abbildungsfeld auszurichten.

9. System nach einem der vorhergehenden Ansprüche, wobei der Kompensator (11) mindestens eine versetzte sphärische oder asphärische dioptrische Komponente umfasst.

10. Plattform, die mit einem System nach einem der vorhergehenden Ansprüche versehen ist.

11. Plattform nach Anspruch 10, wobei es sich um ein Kampfflugzeug, ein Transportflugzeug, ein Militärflugzeug oder eine Drohne, ein Gebäude, ein Landfahrzeug oder ein Schiff handelt.

## Claims

1. An omnidirectional optronic system with two axes of rotation, a carrier axis (1) and a carried axis (2), that are perpendicular to each other, comprising an imaging channel (3) and a laser channel (4), the laser channel (4) at the point of injection at the entrance of the system and the imaging channel (3) being concentric with the carrier axis (1), **characterised in that** the laser channel (4) comprises:
- a first reflective surface (5), arranged at the entrance of the system at the point of injection, configured to split the laser channel (4) from the imaging channel (3) by reflecting the injected laser beam so as to deviate it from the carrier axis (1) of the system;
- a second reflective surface (6) for deflecting the laser beam reflected by the first reflective surface (5) toward the exit window (7), shaped as a spherical dome, offset from the imaging channel (3);
- an expander (8a) configured to increase the diameter of the laser beam reflected by the second reflective surface (6) and to reduce its divergence;
- a deflector (8b) configured to modify the angular direction of the laser beam inside a cone of apex angle comprised between 3° and 6°;
- a third reflective surface (9) and a fourth reflective surface (10) configured to direct the expanded laser beam toward the exit window (7), shaped as a spherical dome, parallel to the carrier axis (1); and
- a compensator (11) configured to compensate for aberrations in the exit window (7), shaped as a spherical dome;
- for the imaging channel (3):
- a first group of lenses (12) and a second group of lenses (13) arranged as an afocal Kepler device; and
- a fifth reflective surface (14), a sixth reflective surface (15), a seventh reflective surface (16), and an eighth reflective surface (17), arranged between the two groups of lenses (12, 13);
the first reflective surface (5), the second reflective surface (6), the expander (8a), the deflector (8b), the third reflective surface (9), the fifth reflective surface (14), the sixth reflective surface (15), and the seventh reflective surface (16) forming a first assembly that rotates as one about the carrier axis (1); and
the fourth reflective surface (10), the eighth reflective surface (17), the second lens assembly (13), and the compensator (11) forming a second group that rotates as one about the carried axis (2).

2. The system according to claim 1, comprising a first stage (18) that is rotatable about the carrier axis (1), allowing the line of sight to be rotated about the carrier axis (1).

3. The system according to claim 1 or 2, comprising a second mobile stage (19) that is rotatable about the carried axis (2), allowing the line of sight to be rotated about the carried axis (2).

4. The system according to one of the preceding claims, wherein the afocal Kepler device has a magnification comprised in the interval of values [-2; -0.5].

5. The system according to claim 4, wherein the afocal Kepler device has a magnification of -1.

6. The system according to one of the preceding claims, wherein the expander (8a) comprises a divergent/convergent afocal device.

7. The system according to claim 6, wherein the divergent/convergent afocal device comprises lenses, or mirrors.

8. The system according to one of the preceding claims, wherein the deflector (8b) comprises a diasporometer, or a two-axis mirror, allowing the laser line of sight to be oriented in the instantaneous imaging field.

9. The system according to one of the preceding claims, wherein the compensator (11) comprises at least one off-centre spherical or aspherical dioptric component.

10. A platform provided with a system according to one of the preceding claims.

11. The platform according to claim 10, the platform being a combat aircraft, a transport aircraft, a military aircraft, or a drone, a ship, a land vehicle or a boat.
